# FASCICULE DE BREVET EUROPEEN

(11) **EP 0 733 925 B1**
(45) Date de publication et mention de la délivrance du brevet: **04.01.2006**
(21) Numéro de dépôt: 96400550.8
(22) Date de dépôt: 18.03.1996
(51) Int. Cl.: G02B 6/44

(54) **Procédé de formation d'une gaine d'un module de fibres optiques et câble à fibres optiques comportant des modules de fibres optiques ayant une telle gaine**
Verfahren zur Bildung eines Mantels eines LWL-Moduls und faseroptisches Kabel bestehend aus LWL-Modulen, die einen solchen Mantel aufweisen
Method of forming a sheath of a fiber optical unit and fiber optical cable comprising fibre optical units having such a sheath

(30) Priorité: 24.03.1995 FR 9503492
(43) Date de publication de la demande: 25.09.1996
(73) Titulaire: ALCATEL CABLE, 92100 Clichy (FR)
(72) Inventeur: Hulin, Jean-Pierre, 95300 Pontoise (FR); Bonicel, Jean-Pierre, 92500 Rueil (FR)
(74) Mandataire: Blokland, Arie

(56) Documents cités:
- EP-A- 0 060 180
- EP-A- 0 200 104
- EP-A- 0 468 878
- DE-A- 3 537 553
- DE-A- 3 811 126
- GB-A- 2 001 777
- US-A- 4 964 691
- PROCEEDINGS IEEE, vol. 123, no. 6, 1 juin 1976 (1976-06-01), pages 597-602,

## Description

La présente invention concerne un procédé de formation d'une gaine d'un module de fibres optiques et un câble à fibres optiques.

Le procédé de formation d'une gaine d'un module de fibres optiques, ledit module étant destiné à former partie d'un câble à fibres optiques comprenant une gaine extérieure renfermant au moins deux modules de fibres optiques comprenant chacun un groupe respectif de fibres optiques entouré par une gaine de module, comprend les étapes suivantes:
- enroulement d'un film en matériau plastique de forme rectangulaire autour d'une groupe de fibres optiques, et
- fixation du film ainsi enroulé pour entourer et maintenir ledit groupe de fibres optiques.

Le câble à fibres optiques comprend une gaine extérieure renfermant une pluralité de fibres optiques séparées en au moins deux modules de fibres optiques, chacun desdits modules consistant en une gaine de module entourant un groupe respectif de fibres optiques, chaque gaine de module étant formée par un film en matériau plastique de forme rectangulaire enroulé et fixé autour du groupe de fibres optiques correspondant.

GB 2 001 777 A divulgue en effet un procédé de formation d'une gaine d'un module de fibres optiques, à savoir:
- le fait que ledit module est destiné à former partie d'un câble à fibre optique comprenant une gaine extérieure renfermant au moins deux modules de fibres optiques comprenant chacun un groupe respectif de fibres optiques,
- ledit procédé comportant les étapes de:
   déformation d'un film autour dudit groupe de fibres optiques, et
   fixation du film ainsi déformé autour du groupe de fibres optiques pour entourer et maintenir ledit groupe de fibres optiques.

GB 2 001 777 A divulgue un câble à fibres optiques, à savoir:
- une gaine extérieure renfermant une pluralité de fibres optiques séparées en au moins deux modules de fibres optiques,
- chacun desdits modules consistant en une gaine de module entourant un groupe respectif de fibres optiques,
- ladite gaine de module étant formée par un film en matériau plastique.

EP 0 200 104 A divulgue un câble à fibres optiques, à savoir:
- une gaine extérieure renfermant une pluralité de fibres optiques séparées en au moins deux modules de fibres optiques,
- chacun desdits modules consistant en une gaine de module entourant un groupe respectif de fibres optiques,
- ladite gaine de module étant formée par un film en matériau plastique.

Les systèmes de transmission sur fibre optique ont connu ces dernières années et connaîtront dans les années à venir un très grand développement, notamment dans le domaine des télécommunications, grâce à leur immense potentialité par comparaison avec les systèmes de transmission sur cuivre. Pour des applications à des services à large bande dans des réseaux distribués ou commutés, l'utilisation des fibres optiques apparaît aujourd'hui techniquement incontournable et économiquement viable en raison des coûts de fabrication de plus en plus réduits des fibres optiques. Tant pour les services commutés, autorisant l'échange d'informations entre deux terminaux d'abonné donnés (visiophone), que pour les services distribués où le terminal d'abonné est une terminaison passive n'interagissant pas avec le centre de distribution (distribution de programmes télévisés), ces réseaux ont recours à des câbles à fibres optiques définissant de multiples subdivisions, ou ramifications, pour atteindre les abonnés.

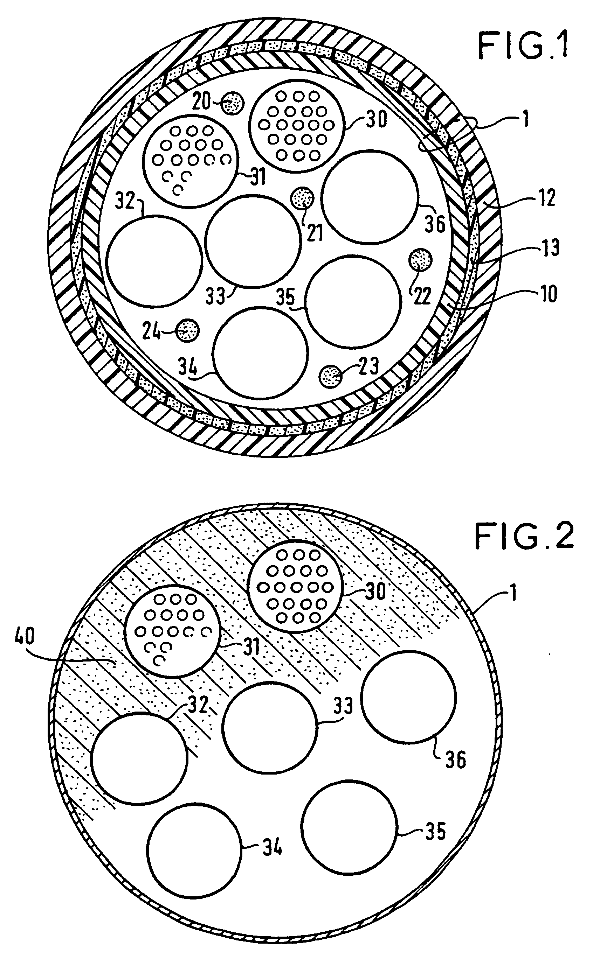

Les figures 1, 2 montrent respectivement deux structures de câble connues selon la technique antérieure. En coupe transversale du câble, il peut être distingué une gaine extérieure 1 et une pluralité de modules de fibres optiques, notés 30 à 36. Ces modules définissent des conduits séparés pouvant être identifiés en vue de faciliter le raccordement des abonnés, par exemple au voisinage des terminaisons du réseau. Chacun de ces modules 30-36 est sous la forme d'une gaine de module entourant un groupe respectif de fibres optiques. Selon la variante de la figure 1, la gaine extérieure 1 du câble comprend deux gainesélémentaires concentriques 10 et 12, respectivement intérieure et extérieure, et un gaine de renfort 13 disposée entre les deux gaines élémentaires. La gaine de renfort 13 pourrait être remplacée selon une variante par au moins deux éléments de renfort longitudinaux équirépartis sur la périphérie de la gaine élémentaire intérieure 13. Sont en outre prévus des rubans ou filins d'étanchéité 20, 21, 22, 23 et 24 disposés longitudinalement à l'intérieur du câble. Dans la variante de la figure 2, un matériau de remplissage 40 remplit le volume intérieur à la gaine extérieure qui n'est pas occupé par des modules 30 - 36. Ce matériau de remplissage est par exemple une matériau d'étanchéité à apparence de gelée ou un matériau plastique extrudé autour des modules élémentaires 30 -36. L'invention portant sur les caractéristiques d'un module de fibres optiques et non sur celles d'une structure de câble, les variantes relatives à la réalisation d'une telle structure ne seront donc pas introduites avec plus de détails dans la description qui suit, mais l'homme du métier retiendra que la gaine extérieure peut prendre diverses formes, telles que métal ou plastique, et que des modifications, adjonctions ou suppressions d'un type connu peuvent être apportées à ces structures décrites dans les figures 1 et 2.

La technique antérieure, telle que rappelée dans la demande de brevet européen EP-A-0 468 878, décrit des modules de fibres optiques dont la gaine de module est de faible épaisseur de sorte à pouvoir être aisément déchirée. Chacun des modules de fibres optiques est obtenu par extrusion d'un matériau plastique, tel que polyéthylène ou polypropylène, autour d'un groupe de fibres optiques, pour former la gaine de module. Un premier inconvénient d'un tel module est qu'il nécessite une opération d'extrusion pour sa fabrication. Un second inconvénient est que la quantité de matière nécessaire à la formation de la gaine de module, bien que pouvant être considérée comme faible en raison précisément de la faible épaisseur de la gaine de module, reste néanmoins relativement élevée, ce qui a pour résultat d'augmenter le coût de fabrication d'un câble.

L'invention vise à remédier aux inconvénients précités en fournissant notamment un procédé d'obtention d'un module de fibres optiques ne nécessitant aucune opération d'extrusion. L'invention vise en outre à réduire sensiblement la quantité de matière utile à la formation de la gaine module comparativement aux réalisations connues. En corollaire de ce qui précède, l'invention permet d'augmenter la densité des fibres optiques dans un câble. En outre, l'invention fournit un câble à fibres optiques particulièrement avantageux.

A cette fin, l'invention concerne un procédé de formation d'une gaine d'un module de fibres optiques tel que défini dans la revendication 1.

Typiquement, l'étape d'enroulement du film est précédée par une étape de traction du groupe de fibres optiques.

Selon une première variante, l'étape d'enroulement consiste en le repliement du film sur lui-même dans le sens de sa longueur autour du groupe de fibres optiques qui défile par traction, de sorte qu'une première face dudit film se superpose à une seconde face dudit film le long d'une portion de largeur donnée du film.

Selon une seconde variante, l'étape d'enroulement consiste en un rubanage en hélice dudit film autour du groupe de fibres optiques défilant par traction.

Typiquement, l'étape de fixation du film enroulé autour du groupe de fibres optiques est obtenue par collage.

En outre, le film étant fait en un matériau thermorétractable, l'étape de fixation est suivie par une étape de chauffage du film de sorte qu'il se rétracte autour du groupe de fibres optiques.

L'invention fournit également un câble renfermant des modules de fibres optiques. Un tel câble à fibres optiques est tel que defini à la revendication 5.

Selon une première variante de l'invention, chaque film est replié sur lui même dans le sens de sa longueur autour du groupe de fibres optiques correspondant, une première face dudit film étant superposée et fixée à une seconde face dudit film le long d'une portion de largeur donnée dudit film. Par exemple, la première face du film est fixée par collage à la seconde face du film le long de ladite portion de largeur donnée.

Selon une seconde variante, chaque film est rubané en hélice autour du groupe de fibres optiques correspondant.

Un câble à fibres optiques est caractérisé en ce que chacun desdits modules est disposé de manière sensiblement rectiligne à l'intérieur de la gaine extérieure, ou chacun desdits modules est disposé de manière sensiblement hélicoïdale à l'intérieur de la gaine extérieure, ou chacun desdits modules est disposé de manière sensiblement en SZ à l'intérieur de la gaine extérieure.

Ou bien le film est replié sur lui même suivant sa largeur autour desdits au moins deux des modules, une première face du film étant superposée et fixée à une seconde face du film le long d'une portion de largeur donnée du film, ou bien le film est rubané en hélice autour desdits au moins deux desdits modules.

Un câble selon l'invention peut posséder une information d'identification de module sur une face extérieure de chaque film.

A l'intérieur de la gaine extérieure du câble, chacun des modules peut être disposé ou bien de manière sensiblement rectiligne, ou bien de manière sensiblement hélicoïdale, ou encore de manière sensiblement en SZ.

Un câble complexe à fibres optiques, comprenant au moins deux câbles du type décrit ci-dessus est également envisagé par l'invention.

D'autres caractéristiques et avantages de la présente invention apparaîtront plus clairement à la lecture de la description suivante, en référence aux dessins annexés correspondants, dans lesquels :
- les figures 1 et 2 montrent, en coupe transversale, respectivement deux câbles à fibres optiques de type connu selon la technique antérieure;
- la figure 3 montre, selon une première variante de l'invention, l'enveloppement d'un groupe de fibres par un film en vue de la réalisation d'un module de fibres optiques inclus dans un câble du type montré dans les figures 1 ou 2;
- la figure 4 montre, selon une seconde variante de l'invention, le rubanage d'un groupe de fibres dans un film pour la réalisation d'un module de fibres optiques inclus dans un câble du type montré dans les figures 1 ou 2;
- la figure 5 montre, selon une première variante de l'invention, l'enveloppement de N modules de fibres par un film en vue de la réalisation d'un module complexe de fibres optiques inclus dans un câble du type montré dans les figures 1 ou 2;
- la figure 6 montre, en variante de la réalisation de la figure 5, le rubanage d'un film autour de N modules de fibres optiques, pour la réalisation d'un module complexe de fibres optiques inclus dans un câble du type montré dans les figures 1 ou 2; et
- la figure 7 schématise un système pour la fabrication selon l'invention d'un module de fibres optiques.

L'évolution technologique dans le domaine des fibres optiques rend aujourd'hui possible la fabrication de fibres à forte résistance mécanique et faible sensibilité aux micro-contraintes. Parallèlement à cela, dans le domaine de l'emballage, sont utilisés de nos jours des films synthétiques en matériau plastique tel que polyoléfine, polyester, polychlorure de vinyle, celluloïd, ou autres, qui possèdent une très faible épaisseur tout en ayant une grande résistance. Ces films, par exemple de format sensiblement rectangulaire, sont sous la forme d'une mince couche d'un matériau plastique et leur épaisseur très réduite peut être comprise entre 5 µm et 150 µm. Ces films peuvent exister sous la forme de matériau composite.

L'invention met à profit ces deux considérations en prévoyant notamment un câble à fibres optiques dans lequel chaque module de fibres optiques sous la forme d'une gaine de module entourant un groupe respectif de fibres optiques, est tel que la gaine de module est formée par un film, tel que film synthétique. Comparativement à une gaine de module fabriquée selon une opération d'extrusion conventionnelle, l'épaisseur de la gaine est réduite selon l'invention, en prenant typiquement une valeur inférieure à 150 µm.

EP 0 468 878 A concerne une gaine de maintien qui est une couche colorée variant de quelques millièmes de millimètre à quelques dixièmes de millimètre, de préférence entre un centième de millimètre et un dixième de millimètre. Il en résulte pour la réalisation d'un câble à fibres optiques, une plus grande densité de fibres dans un volume donné, en raison de la réduction du volume occupé par les gaines de module.

En outre, le film constitutif de chaque gaine de module est fait en un matériau plastique thermorétractable.

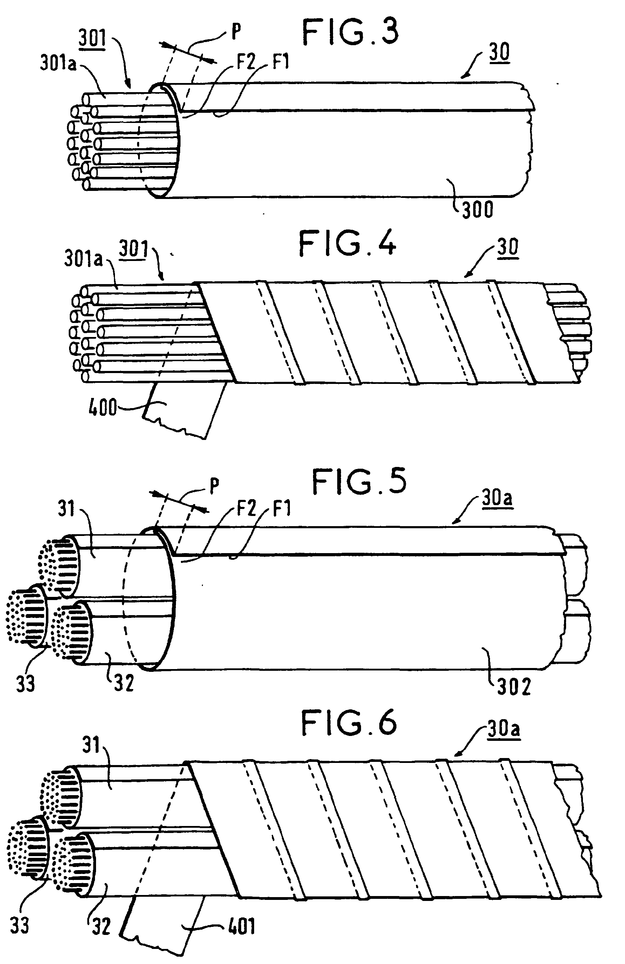

Selon une première variante de l'invention, en référence à la figure 3, un module de fibres optiques 30 disposé à l'intérieur d'une gaine exterieure 1 d'un câble du type montré dans les figures 1 et 2, comprend un film en matière plastique thermorétractable 300 de forme rectangulaire replié sur lui même dans le sens de sa longueur autour d'un groupe respectif 301 de fibres optiques, telles que la fibre 301a. Une première face F1 du film se superpose et est fixée à une seconde face opposée du film F2 le long d'une portion p donnée de la largeur du film. La fixation de la première face F1 sur la seconde face F2 est par exemple obtenue par collage. Cette variante est particulièrement avantageuse en ce qu'elle offre une optimisation de la surface de film nécessaire à l'enroulement du groupe de fibres. Le film 300 ainsi enroulé et fixé est thermorétracté autour du groupe de fibres optiques 301 correspondant.

Selon une seconde variante illustrée à la figure 4, le film 400 est rubané en hélice autour d'un groupe de fibres optiques 301, en ne laissant apparaître aucun jour entre deux enroulements successifs. Il peut être prévu une superposition de deux enroulements successifs du film sur une portion de largeur du film plus ou moins grande.

Dans ces deux variantes, il peut être envisagé que la face extérieure visible du film qui entoure un groupe de fibres porte une information d'identification de module. Cette information peut consister en une couleur, un numéro ou un code à barres permettant de distinguer le module des autres modules. Il est ainsi possible, lors d'une manipulation des modules dans le câble, d'identifier chacun des modules. En outre, les fibres 301a peuvent être maintenues dans le film avec ou sans liberté de mouvement en fonction du degré de serrage du film autour des fibres, le film étant en contact direct avec les fibres du groupe.

L'invention ne se limite pas uniquement à envisager un film entourant un groupe de fibres optiques, mais prévoit également qu'un film soit utilisé pour rassembler ensemble au moins deux modules de fibres optiques, ces modules pouvant être des modules du type décrit en référence aux figures 3 ou 4. Sont ainsi formés des modules composés, ou complexes, de fibres optiques. Deux variantes sont présentées en relation avec les figures 5 et 6. Selon la figure 5, par analogie avec la figure 3 décrite précédemment, le module 30a composé de fibres optiques est obtenu par un film en matière plastique 302 de forme rectangulaire qui est replié sur lui même suivant sa largeur autour de N=3 modules de fibres optiques 31, 32 et 33. Une première face F1 du film 302 se superpose et est fixée à une seconde face opposée du film F2 le long d'une portion p donnée de la largeur du film. La fixation de la première face F1 sur la seconde face F2 est par exemple obtenue par collage. Les modules de fibres 31, 32 et 33 peuvent être maintenus dans le film avec ou sans liberté de mouvement. Dans la seconde variante par analogie avec la description relative à la figure 4, le module composé de fibres optiques est obtenu grâce à un film 401 de forme sensiblement rectangulaire qui est rubané en hélice autour de N=3 modules de fibres optiques 31, 32 et 33, en ne laissant apparaître aucun jour entre deux enroulements successifs de film. Il peut être prévu une superposition de deux enroulements successifs sur une portion de largeur du film plus ou moins grande. Ainsi, selon ces deux variantes de module composé de fibres optiques, le film est prévu pour regrouper, ou rassembler, ensemble au moins deux modules de fibres optiques. Au même titre que dans les figures 3 et 4, les films 302 et 401 peuvent être pourvus sur leur surface extérieure visible d'une information d'identification de module composé, telle que couleur, numéro ou code à barres.

Ces modules de fibres optiques 30 ou modules composés de fibres optiques 30a sont destinés à être disposés à l'intérieur d'une enveloppe extérieure d'un câble du type décrit dans le préambule de la description. Ainsi par exemple, en revenant au figures 1 et 2, la gaine extérieure 1 peut être formée par une ou plusieurs gaines élémentaires concentriques 10, 12 en matériau plastique. Entre deux de ces gaines, il peut être prévu au moins un élément de renfort longitudinal. En variante, la gaine extérieure peut être une gaine métallique. Par ailleurs, un matériau de remplissage, tel que matériau d'étanchéité, peut être utilisé pour remplir le volume intérieur de la gaine extérieure non occupé par les modules.

A l'intérieur de la gaine extérieure 1 dans le sens longitudinal, un module peut être disposé ou bien de manière sensiblement rectiligne, ou bien de manière sensiblement hélicoïdale, ou encore de manière sensiblement en SZ, c'est à dire de façon hélicoïdale avec un déploiement en rotation de sens alterné.

Un câble complexe comprenant au moins deux câbles du type décrit ci-dessus rentre également dans le cadre de l'invention. Un tel câble complexe peut utiliser un élément de renfort central.

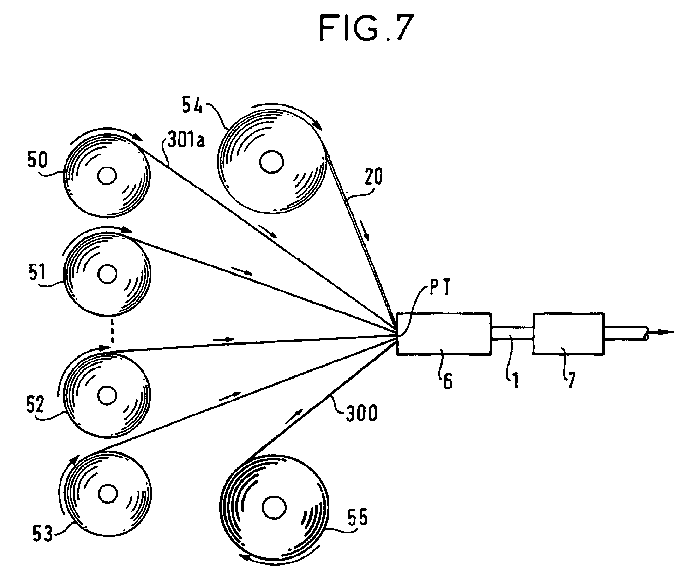

Pour terminer la description de l'invention, il est maintenant présenté en référence à la figure 7, selon une réalisation de l'invention, un procédé de fabrication d'un module de fibres optiques du type montré dans la figure 3. Un système pour la mise en oeuvre de ce procédé comprend N=4 dispositifs de stockage 50, 51, 52 et 53 de fibres optiques, un dispositif de stockage 55 d'un film synthétique, un dispositif 6 de formation de module, et un dispositif de chauffage 7. Selon une variante de ce procédé, le système peut comprendre, en outre, un dispositif de stockage de filin d'étanchéité 54. Typiquement, tous les dispositifs de stockage 50, 51, 52, 53, 54, et 55 sont sous la forme de rouleaux. Les fibres optiques respectives stockées dans les rouleaux 50 - 53 sont tirées vers un point de convergence PT situé sensiblement à l'entrée du dispositif de formation de module 6, et le film 300 extrait du dispositif 55 est replié sur lui-même dans le sens de sa longueur autour du groupe de fibres optiques au voisinage de ce point de convergence PT de sorte qu'une première face du film 300 se superpose à une seconde face du film le long d'une portion de largeur donnée du film. Sur la première face du film 300, le long de ladite portion de largeur donnée p (fig.3) du film, est ou bien prévu un matériau autocollant, ou bien introduite une colle de sorte que ladite première face vienne se fixer par collage à la seconde face du film. Le film étant fait en un matériau thermo-rétractable après que le film soit replié sur lui-même dans le sens de sa longueur autour du groupe de fibres optiques au voisinage du point de convergence PT, le film est chauffé par le dispositif 7 de sorte qu'il se rétracte autour du groupe de fibres optiques.

Plus généralement, le procédé de formation d'une gaine d'un module de fibres optiques comprend l'enroulement d'un film autour du groupe de fibres optiques, la fixation du film ainsi déformé autour du groupe de fibres optiques pour entourer et maintenir le groupe de fibres optiques, et le chauffage du film ainsi enroulé et fixé pour provoquer sa rétraction autour du groupe de fibres optiques.

Le groupe de fibres optiques est typiquement tiré de sorte que l'étape d'enroulement du film est réalisée en un point fixe. Selon une première variante, l'étape d'enroulement consiste en le repliement du film sur lui-même dans le sens de sa longueur autour du groupe de fibres optiques, qui défile par traction, de sorte qu'une première face du film se superpose à une seconde face du film le long d'une portion de largeur donnée dudit film.

Selon une autre variante, l'étape d'enroulement consiste en un rubanage en hélice dudit film autour du groupe de fibres optiques défilant par traction.

Avantageusement, l'étape de fixation du film déformé autour du groupe de fibres optiques est obtenue par collage.

Le film étant fait en un matériau thermorétractable, l'étape de fixation est suivie par une étape de chauffage du film de sorte qu'il se rétracte autour du groupe de fibres optiques.

Bien que dans la description qui précède, les modules soient composés par une pluralité de fibres optiques unitaires, il apparaîtra évident à l'homme du métier que ces fibres optiques peuvent être, au moins en partie, sous forme de rubans de fibres optiques.

## Revendications

1. Procédé de formation d'une gaine d'un module de fibres optiques (30-36), ledit module étant destiné à former partie d'un câble à fibres optiques comprenant une gaine extérieure (1) renfermant au moins deux modules de fibres optiques comprenant chacun un groupe respectif de fibres optiques (301) entouré par une gaine de module, ledit procédé comprenant les étapes suivantes:
- enroulement d'un film (300, 400) en matériau plastique de forme rectangulaire autour d'un groupe de fibres optiques (301), et
- fixation du film ainsi enroulé pour entourer et maintenir ledit groupe de fibres optiques,
**caractérisé en ce que**:
- on utilise un film (300, 400) fait en un matériau plastique thermo-rétractable, et
- on fait suivre l'étape de fixation d'une étape de chauffage du film de façon que ledit film enroulé et fixé se rétracte autour dudit groupe de fibres optiques, le film ainsi rétracté constituant la gaine dudit module.

2. Procédé de fabrication d'un module de fibres optiques conforme à la revendication 1, **caractérisé en ce que**:
- l'étape d'enroulement du film est précédée par une étape de traction du groupe de fibres optiques (301), et
- l'étape d'enroulement consiste en le repliement du film (300) sur lui-même dans le sens de sa longueur autour du groupe de fibres optiques (301) qui défile par traction, de sorte qu'une première face (F1) dudit film (300) se superpose à une seconde face (F2) dudit film le long d'une portion de largeur donnée dudit film.

3. Procédé de fabrication d'un module de fibres optiques conforme à la revendication 1, **caractérisé en ce que**:
- l'étape d'enroulement du film est précédée par une étape de traction du groupe de fibres optiques (301), et
- l'étape d'enroulement consiste en un rubanage en hélice dudit film (400) autour du groupe de fibres optiques (301) défilant par traction.

4. Procédé conforme à l'une quelconque des revendications précédentes, **caractérisé en ce que** l'étape de fixation du film enroulé autour du groupe de fibres optiques est obtenue par collage.

5. Câble à fibres optiques comprenant une gaine extérieure (1) renfermant une pluralité de fibres optiques (301 a) séparées en au moins deux modules de fibres optiques (30-36), chacun desdits modules consistant en une gaine de module entourant un groupe respectif de fibres optiques (301), chaque gaine de module étant formée par un film (300, 400) en matériau plastique de forme rectangulaire enroulé et fixé autour du groupe de fibres optiques (301) correspondant, **caractérisé en ce que** ledit film (300, 400) constitutif de chaque gaine de module est fait en matériau plastique thermo-rétractable, chaque film (300, 400) ainsi enroulé et fixé étant en outre thermorétracté autour du groupe de fibres optiques (301) correspondant.

6. Câble conforme à la revendication 5, **caractérisé en ce que** chaque film (300) est replié sur lui même dans le sens de sa longueur autour du groupe de fibres optiques (301) correspondant, une première face (F1) dudit film étant superposée et fixée à une seconde face (F2) dudit film le long d'une portion de largeur donnée (p) dudit film (300).

7. Câble conforme à la revendication 6, **caractérisé en ce que** ladite première face (F1) du film est fixée par collage à ladite seconde face (F2) du film le long de ladite portion de largeur donnée (p).

8. Câble conforme à la revendication 5, **caractérisé en ce que** ledit film (400) est rubané en hélice autour dudit groupe de fibres optiques (301).

9. Câble conforme à l'une quelconque des revendications 5 à 8, **caractérisé par** une information d'identification de module sur une face extérieure du film (300, 400) correspondant.

10. Câble conforme à l'une quelconque des revendications 5 à 9, **caractérisé en ce que** chacun desdits modules (30 - 36) est disposé de manière sensiblement rectiligne à l'intérieur de la gaine extérieure (1).

11. Câble conforme à l'une quelconque des revendications 5 à 9, **caractérisé en ce que** chacun desdits modules (30 - 36) est disposé de manière sensiblement hélicoïdale à l'intérieur de la gaine extérieure (1).

12. Câble conforme à l'une quelconque des revendications 5 à 9, **caractérisé en que** chacun desdits modules (30-36) est disposé de manière sensiblement en SZ à l'intérieur de la gaine extérieure (1).

13. Câble conforme à l'une quelconque des revendications 5 à 12, **caractérisé en ce que** ladite gaine extérieure (1) est formée par une ou plusieurs gaines élémentaires concentriques en matériau plastique.

14. Câble conforme à la revendication 13, **caractérisé par** deux gaines élémentaires concentriques et au moins un élément de renfort disposé entre lesdites deux gaines.

15. Câble conforme à l'une quelconque des revendications 5 à 12, **caractérisé en ce que** ladite gaine extérieure (1) est une gaine métallique.

16. Câble conforme à l'une quelconque des revendications 5 à 15, **caractérisé par** un matériau de remplissage (40) remplissant un volume intérieur de la gaine extérieure non occupé par lesdits au moins deux modules (30 - 36).

17. Câble conforme à la revendication 16, **caractérisé en ce que** ledit matériau de remplissage (40) est un matériau d'étanchéité.

18. Câble complexe à fibres optiques, **caractérisé en ce qu'**il comprend au moins deux câbles chacun conforme à l'une quelconque des revendications 5 à 17.

## Patentansprüche

1. Verfahren zum Ausbilden einer Hülle eines Moduls von optischen Fasern (30-36), wobei das Modul dazu bestimmt ist, einen Teil eines Kabels mit optischen Fasern zu bilden, welches eine äußere Hülle (1) umfasst, die wenigstens zwei Module von optischen Fasern einschließt, welche jeweils eine entsprechende Gruppe von optischen Fasern (301) umfassen, welche von einer Modulhülle umgeben sind, wobei das Verfahren die folgenden Schritte umfasst:
- Wickeln eines Films (300, 400) aus einem Kunststoffmaterial mit rechtwinkliger Form um eine Gruppe von optischen Fasern (301), und
- Befestigen des so aufgewickelten Films, um die Gruppe von optischen Fasern zu umschließen und zu halten,
**dadurch gekennzeichnet, dass**:
- ein Film (300, 400) verwendet wird, welcher aus einem wärmeschrumpfbaren Material hergestellt ist, und
- dem Befestigungsschritt ein Schritt zur Erwärmung des Films folgt, so dass der aufgewickelte und befestigte Film sich um die Gruppe von optischen Fasern zusammenzieht, wobei der so zusammengezogene Film die Hülle des Moduls bildet.

2. Verfahren zur Herstellung eines Moduls von optischen Fasern nach Anspruch 1, **dadurch gekennzeichnet, dass**:
- dem Schritt des Wickelns des Films ein Schritt eines Ziehens der Gruppen von optischen Fasern (301) vorangeht, und
- der Schritt des Wickelns im Falten des Films (300) auf sich selbst in seiner Längsrichtung um die Gruppe von optischen Fasern (301) herum besteht, welche durch Zug vorbeiläuft, so dass eine erste Seite (F1) des Films (300) entlang des Films mit gegebener Breite einer zweiten Seite (F2) des Films überlagert wird.

3. Verfahren zur Herstellung eines Moduls von optischen Fasern nach Anspruch 1, **dadurch gekennzeichnet, dass**:
- dem Schritt des Wickelns des Films ein Schritt eines Ziehens der Gruppe von optischen Fasern (301) vorangeht, und
- der Schritt des Wickelns in einer helixartigen Bebänderung des Films (400) um die durch Zug vorbeigeführte Gruppe von optischen Fasern (301) herum besteht.

4. Verfahren nach einem der vorhergehenden Ansprüche, **dadurch gekennzeichnet, dass** der Schritt zur Befestigung des um die Gruppe von optischen Fasern herum gewickelten Films durch Kleben erzielt wird.

5. Kabel mit optischen Fasern, umfassend eine äußere Hülle (1), welche eine Vielzahl von optischen Fasern (301a) einschließt, welche in wenigstens zwei Module von optischen Fasern (30-36) aufgeteilt sind, wobei jedes der Module aus einer Modulhülle besteht, welche eine entsprechende Gruppe von optischen Fasern (301) umgibt, wobei jede Modulhülle durch einen Film (300, 400) aus einem Kunststoffmaterial mit rechtwinkliger Form gebildet ist, welches um die entsprechende Gruppe von optischen Fasern (301) herum gewickelt und befestigt ist,
**dadurch gekennzeichnet, dass** der Film (300, 400), welcher Bestandteil von jeder Modulhülle ist, aus einem wärmeschrumpfbaren Kunststoffmaterial hergestellt ist, wobei jeder so aufgewickelte und befestigte Film (300, 400) außerdem durch Erwärmung um die entsprechende Gruppe von optischen Fasern (301) zusammengezogen ist.

6. Kabel nach Anspruch 5, **dadurch gekennzeichnet, dass** jeder Film (300) in seiner Längsrichtung um die entsprechende Gruppe von optischen Fasern (301) herum gefaltet ist, wobei eine erste Seite (F1) des Films entlang eines Abschnitts des Films (300) mit gegebener Breite (p) einer zweiten Seite (F2) des Films überlagert und daran befestigt ist.

7. Kabel nach Anspruch 6, **dadurch gekennzeichnet, dass** die erste Seite (F1) des Films durch Kleben entlang des Abschnitts gegebener Breite (p) an der zweiten Seite (F2) des Films befestigt ist.

8. Kabel nach Anspruch 5, **dadurch gekennzeichnet, dass** der Film (400) helixartig um die Gruppe von optischen Fasern (301) gewickelt ist.

9. Kabel nach einem der Ansprüche 5-8, **gekennzeichnet durch** eine Kennzeichnungsinformation des Moduls auf einer Außenfläche des entsprechenden Films (300, 400).

10. Kabel nach einem der Ansprüche 5-9, **dadurch gekennzeichnet, dass** jedes der Module (30-36) in im Wesentlichen geradliniger Weise im Inneren der äußeren Hülle (1) angeordnet ist.

11. Kabel nach einem der Ansprüche 5-9, **dadurch gekennzeichnet, dass** jedes der Module (30-36) in im Wesentlichen helixartiger Weise im Inneren der äußeren Hülle (1) angeordnet ist.

12. Kabel nach einem der Ansprüche 5-9, **dadurch gekennzeichnet, dass** jedes der Module (30-36) in im Wesentlichen SZartiger Weise im Inneren der äußeren Hülle (1) angeordnet ist.

13. Kabel nach einem der Ansprüche 5-12, **dadurch gekennzeichnet, dass** die äußere Hülle (1) durch eine oder mehrere konzentrische Elementarhüllen aus einem Kunststoffmaterial gebildet ist.

14. Kabel nach Anspruch 13, **gekennzeichnet durch** zwei konzentrische Elementarhüllen und wenigstens ein Verstärkungselement, welches zwischen den zwei Hüllen angeordnet ist.

15. Kabel nach einem der Ansprüche 5-12, **dadurch gekennzeichnet, dass** die äußere Hülle (1) eine metallische Hülle ist.

16. Kabel nach einem der Ansprüche 5-15, **gekennzeichnet durch** ein Füllmaterial (40), welches ein Innenvolumen der äußeren Hülle, das nicht **durch** die wenigstens zwei Module (30-36) eingenommen ist, auffüllt.

17. Kabel nach Anspruch 16, **dadurch gekennzeichnet, dass** das Füllmaterial (40) ein Dichtungsmaterial ist.

18. Kabelkomplex mit optischen Fasern, **dadurch gekennzeichnet, dass** er wenigstens zwei Kabel in Übereinstimmung mit einem der Ansprüche 5-17 umfasst.

## Claims

1. Method of forming a sheath for a module of optical fibres (30 - 36), said module being intended to form part of an optical fibre cable comprising an outer sheath (1) containing at least two optical fibre modules each comprising a respective group of optical fibres (301) surrounded by a module sheath, said method comprising the following steps:
- winding a film (300, 400) of plastics material of rectangular shape around a group of optical fibres (301), and
- fixing the film thereby wound, so as to surround and hold said group of optical fibres,
**characterised in that**:
- a film (300, 400) made of a heat-shrinkable plastics material is used, and
- the fixing step is followed by a step of heating the film so that said wound and fixed film shrinks around said group of optical fibres, the film thereby shrunk forming the sheath of said module.

2. Method of producing a module of optical fibres, in accordance with claim 1,
**characterised in that**:
- the step of winding the film is preceded by a step of traction on the group of optical fibres (301), and
- the step of winding consists of folding the film (300) over itself longitudinally around the group of optical fibres (301), which advances by means of traction, so that a first surface (F1) of said film (300) overlies a second surface (F2) of said film along a portion of given width of said film.

3. Method of producing a module of optical fibres, in accordance with claim 1,
**characterised in that**:
- the step of winding the film is preceded by a step of traction on the group of optical fibres (301), and
- the step of winding consists of helically taping said film (400) around the group of optical fibres (301) advancing by means of traction.

4. Method according to any one of the preceding claims, **characterised in that** the step of fixing the film wound around the group of optical fibres is accomplished by adhesion.

5. Optical fibre cable comprising an outer sheath (1) containing a plurality of optical fibres (301 a) separated into at least two optical fibre modules (30 - 36), each of said modules consisting of a module sheath surrounding a respective group of optical fibres (301), each module sheath being formed by a film (300, 400) of plastics material of rectangular shape wound and fixed around the corresponding group of optical fibres (301), **characterised in that** said film (300, 400) forming each module sheath is made of heat-shrinkable plastics material, each film (300, 400) thereby wound and fixed also being heat-shrunk around the corresponding group of optical fibres (301).

6. Cable according to claim 5, **characterised in that** each film (300) is folded over itself longitudinally around the corresponding group of optical fibres (301), a first surface (F1) of said film overlying and being fixed to a second surface (F2) of said film along a portion of given width (p) of said film (300).

7. Cable according to claim 6, **characterised in that** said first surface (F1) of the film is fixed by means of adhesion to said second surface (F2) of the film along said portion of given width (p).

8. Cable according to claim 5, **characterised in that** said film (400) is helically taped around said group of optical fibres (301).

9. Cable according to any one of claims 5 to 8, **characterised by** module identification information on an outer surface of the corresponding film (300, 400).

10. Cable according to any one of claims 5 to 9, **characterised in that** each of said modules (30 - 36) is arranged in substantially rectilinear manner inside the outer sheath (1).

11. Cable according to any one of claims 5 to 9, **characterised in that** each of said modules (30 - 36) is arranged in substantially helicoidal manner inside the outer sheath (1).

12. Cable according to any one of claims 5 to 9, **characterised in that** each of said modules (30 - 36) is arranged in a substantially SZ manner inside the outer sheath (1).

13. Cable according to any one of claims 5 to 12, **characterised in that** said outer sheath (1) is formed by one or more concentric simple sheaths of plastics material.

14. Cable according to claim 13, **characterised by** two concentric simple sheaths and at least one reinforcing element arranged between said two sheaths.

15. Cable according to any one of claims 5 to 12, **characterised in that** said outer sheath (1) is a metallic sheath.

16. Cable according to any one of claims 5 to 15, **characterised by** a filler material (40) filling an interior volume of the outer sheath not occupied by said at least two modules (30 - 36).

17. Cable according to claim 16, **characterised in that** said filler material (40) is a material providing imperviousness.

18. Complex optical fibre cable, **characterised in that** it comprises at least two cables each in accordance with any one of claims 5 to 17.
